(19) Europäisches Patentamt
European Patent Office
Office européen des brevets

(11) EP 0 257 567 B2

(12) **NEW EUROPEAN PATENT SPECIFICATION**

(45) Date of publication and mention
of the opposition decision:
**12.11.1997 Bulletin 1997/46**

(51) Int Cl.$^6$: **C08F 2/22**, C08F 2/30,
C08F 257/02

(45) Mention of the grant of the patent:
**08.04.1992 Bulletin 1992/15**

(21) Application number: **87112106.7**

(22) Date of filing: **20.08.1987**

(54) **Resin-fortified emulsion polymers and methods of preparing the same**

Mit Harzen verstärkte Emulsionspolymere und Verfahren zu deren Herstellung

Polymères en émulsion fortifiés par des résines et méthodes de leur préparation

| | |
|---|---|
| (84) Designated Contracting States:<br>**AT BE CH DE ES FR GB GR IT LI LU NL SE** | (56) References cited:<br>**EP-A- 0 037 150**   **EP-A- 0 123 939**<br>**DE-A- 2 520 273**   **GB-A- 1 417 713**<br>**GB-A- 2 109 802**   **GB-A- 2 141 127**<br>**US-A- 3 513 120**   **US-A- 4 120 841**<br>**US-A- 4 298 511** |
| (30) Priority: **22.08.1986 US 899281** | |
| (43) Date of publication of application:<br>**02.03.1988 Bulletin 1988/09** | • **Handbook of Water-Soluble Gums and Resins;**<br>**Mc.Graw Hill Book Co., New York, 1980, pp. 21-3**<br>**to 21-5** |
| (73) Proprietor: **S.C. JOHNSON & SON, INC.**<br>**Racine, Wisconsin 53403-5011 (US)** | Remarks:<br>The file contains technical information submitted<br>after the application was filed and not included in this<br>specification |
| (72) Inventor: **Tsaur, Sheng-Liang**<br>**Racine Wisconsin 53402 (US)** | |
| (74) Representative: **Baillie, Iain Cameron et al**<br>**Ladas & Parry,**<br>**Altheimer Eck 2**<br>**80331 München (DE)** | |

## Description

The present invention relates to a method of preparing resin-fortified emulsion polymer compositions having improved mechanical are physical properties as well as the resin-fortified emulsion polymer compositions prepared in accordance with said method.

High molecular weight emulsion polymers are gaining wide acceptance in the coatings industry. However, high molecular weight emulsion polymer technology has many drawbacks. Problems associated with high molecular weight emulsion polymer systems include poor wetting of metal substances, cratering of resulting films, low gloss or mudcaking of resulting films, wetting and adherency problems, mechanical instability, freeze-thaw instability, shear thinning and poor physical properties of the resulting film. It is quite evident that a need exists to improve emulsion polymer systems.

U.S. Patent 4,151,143, issued to Blank et al., discloses a surfactant-free polymer emulsion coating composition and a method for preparing the same. Blank et al. identify that the main problem with emulsion polymers employed for coatings is the presence of surfactants which are employed to stabilize the emulsions but which adversely affect the water and corrosion resistance of the resulting film as well as the adhesion of the coating especially to metal surfaces. The Blank et al. emulsion polymers are prepared in a two stage process. The process includes (1) a first stage wherein a conventional carboxyl group containing polymer is prepared by a conventional solution or bulk polymerization technique and thereafter water-dispersed or solubilized by partial or full neutralization thereof with an organic amine or base and application of high shear agitation and (2) a second stage wherein a mixture of polymerizable monomers and polymerization catalyst is added to the first stage emulsion at an elevated temperature to effect polymerization of the stage two monomers resulting in the formation of an emulsion coating composition. The coating composition is surfactant-free.

U.S. Patent 4,179,417, issued to Sunada et al., discloses a composition for water based paints containing a water soluble resin and a water dispersible polymer. The water soluble resin contains 50-99.5 percent by weight of an alpha, beta-monoethylenically unsaturated acid alkyl ester or an alkenyl benzene 0.5-20 percent by weight of an alpha, beta-monoethylenically unsaturated acid and 0-30 percent by weight of an hydroxyalkyl ester of an alpha, beta-monoethylenically unsaturated acid. These monomers are polymerized in the presence of an alkyl resin containing a polymerizable unsaturated group, epoxy esters containing a polymerizable group, drying oils, fatty acids of drying oils and diene polymers. The resulting polymers are water solubilized by the addition of ammonia or an amine. The water dispersible polymer contains hydroxy and/or carboxyl functional groups and contains an alpha, beta-monoethylenically unsaturated acid monomer and/or hydroxy alkyl ester of such a monomer and ether ethylenically unsaturated monomers. The compositons disclosed in U.S, 4,179,417 are employed as water based paints and can optionally contain a cross linking agent.

Canadian Patent 814,528, issued June 3, 1969, discloses low molecular weight alkali soluble resin, resin cuts and methods of their preparation and purification. The resins are disclosed as being especially useful as emulsifers, leveling agents and film-formers. The number average molecular weight of the resins range from 700-5,000 and the resins have acid numbers between 140-300. The resins are disclosed as emulsifers in the preparation of emulsion polymers resulting in emulsion polymers which are stable and substantially free from coagulum. For this use, i.e. emulsifier in emulsion polymerization reactions, the resins must have a number average molecular weight between 1,000 and 2,000 and preferably between 1,000 and 1,500. Resins having a number average molecular weight greater than 2,000 result in unstable and coagulated emulsion polymers when used as the emulsifier in emulsion polymerization reactions.

Problems commonly associated with high molecular weight emulsion polymers include problems relating to mechanical stability, freeze-thaw stability, viscosity, pigment dispersity and wetting. In particular, the viscosity of high molecular weight emulsion polymers is shear dependent (non-Newtonian) and shear thinning (decrease in viscosity) occurs.

The resin-fortified emulsion polymers of the present invention provide extraordinary mechanical, physical and performance properties when compared to conventional emulsion polymers and represent a pioneering advance in emulsion polymerization technology. In particular, the resin-fortified emulsion polymers of the present invention possess (1) substantially Newtonian-like rheological properties (viscosity is shear independent), (2) excellent mechanical stability and freeze-thaw stability, (3) excellent pigment dispersity and (4) excellent wetting properties. Additionally, the present invention allows great flexibility in controlling the amount and type of resin added to the emulsion polymer compared to the Blank et al. emulsion polymers and the polymers disclosed in Canadian 814,528. The greater flexibility allows for the control of the properties of the final emulsion polymer product.

The present invention provides a method of producing a resin-fortified emulsion polymer composition utilizing an emulsion polymerization reaction, wherein emulsion particles form as a result of the utilization of the emulsion polymerization reaction, the method characterized by the steps of: adding, to a reactor, water and a portion of an effective amount of a surfactant stabilizer for preventing coagulation of the emulsion particles; agitating, the reactor contents and subjecting the reactor contents to an inert atmosphere; heating the agitated reactor contents to a predetermined reaction temperature; adding to the agitated reactor a first portion of an emulsion-polymerizable monomer mixture comprising ethylenically unsaturated monomers selected from the group consisting of olefins, monovinylidene aromatics, alpha, beta-ethylenically unsaturated carboxylic acids and esters thereof, ethylenically unsaturated dicarboxylic anhydrides, and halo substituted olefinics; adding to the monomer-containing agitated reactor an effective amount of an initiator for initiating the emulsion polymerization reaction; adding to the initiator-containing agitation reactor a second portion of the monomer mixture together with the remainder of the surfactant stabilizer; thereafter adding to the agitated reactor an effective amount of a low molecular weight resin soluble or dispersable in water or in alkali, for effecting preselected flow characteristics of the emulsion polymer composition, wherein the number average molecular weight of the low molecular weight resin is 500 to 20,000; wherein said low molecular weight resin is prepared from ethylenically unsaturated monomers selected from at least one of olefins, monovinylidene aromatics, alpha,beta-ethylenically unsaturated carboxylic acids and esters thereof, ethylenically unsaturated dicarboxylic anhydrides, and mixtures thereof; and adding to the resin-containing agitated reactor contents the remainder of the monomer mixture, said low molecular weight resin being present in an amount of at least 2 weight percent based on the total weight of solids contained in the agitated reactor.

In one embodiment the present invention provides a method of producing a resin-fortified emulsion polymer composition utilizing an emulsion polymerization reaction, wherein emulsion particles form as a result of the utilization of the emulsion polymerization reaction, the method characterized by the steps of: adding, to a reactor, water and an effective amount of a surfactant stabilizer for preventing coagulation of the emulsion particles; agitating the reactor contents and subjecting the reactor contents to an inert atmosphere; heating the agitated reactor contents to a predetermined reaction temperature; co-feeding into the agitated reactor (1) an emulsion-polymerizable monomer mixture comprising ethylenically unsaturated monomers selected from the group consisting of olefins, monovinylidene aromatics, alpha,beta-ethylenically unsaturated carboxylic acids and esters thereof, ethylenically unsaturated dicarboxylic anhydrides, and halo substituted olefinics, and (2) an effective amount of an initiator for initiating the emulsion polymerization reaction; and adding to the agitated reactor, after initiation of the emulsion polymerization reaction, an effective amount of a low molecular weight resin, soluble or dispersable in water or in alkali, for effecting preselected flow characteristics of the emulsion polymer composition, wherein the number average molecular weight of the low molecular weight resin is 500 to 20,000, wherein said low molecular weight resin is prepared from ethylenically unsaturated monomers selected from at least one of olefins, monovinlyidene aromatics, alpha,beta-ethylenically unsaturated carboxylic acids and esters thereof, ethylenically unsaturated dicarboxylic anhydrides, and mixtures thereof; said low molecular weight resin being present in an amount of at least 2 weight percent based on the total weight of solids contained in the agitated reactor, and wherein said low molecular weight resin is added anytime up to an hour after the monomer mixture and the initiator have been added to the reaction mixture.

In another embodiment the present invention provides a method of producing a resin-fortified emulsion polymer composition utilizing an emulsion polymerization reaction, wherein emulsion particles form as a result of the utilization of the emulsion polymerization reaction, the method characterized by the steps of: adding, to a reactor, water and an effective amount of a surfactant stabilizer for preventing coagulation of the emulsion particles; agitating the reactor contents and subjecting the reactor contents to an inert atmosphere; heating the agitated reactor contents to a predetermined reaction temperature; adding to the agitated reactor 0.1-15% by weight of an emulsion-polymerizable monomer mixture comprising ethylenically unsaturated monomers selected from the group consisting of olefins, monovinylidene aromatics, alpha,beta-ethylenically unsaturated carboxylic acids and esters thereof, ethylenically unsaturated dicarboxylic anhydrides, and halo substituted olefinics; adding to the monomer-containing agitated reactor an effective amount of an initiator for initiating the emulsion polymerization reaction; adding to the initiator-containing agitated reactor, over about a 1 to about a 2 hour period of time, 25-90% by weight of the monomer mixture; thereafter adding to the agitated reactor an effective amount of a low molecular weight resin, soluble or dispersable in water or in alkali, for effecting preselected flow characteristics of the emulsion polymer composition, wherein the number average molecular weight of the low molecular weight resin is 500 to 20,000, wherein said low molecular weight resin is prepared from ethylenically unsaturated monomers selected from at least one of olefins, monovinylidene aromatics, alpha,beta-ethylenically unsaturated carboxylic acids and esters thereof, ethylenically unsaturated dicarboxylic anhydrides, and mixtures thereof; adding, after completion of the resin-addition step, 5-75% by weight of the monomer mixture to the agitated reactor contents, over 1/4 to a 1 hour period of time; and thereafter maintaining the reactor contents at the reaction temperature, with agitation, for a 1 to 2 hour additional period of time, said low molecular weight resin being present in an amount of at least 2 weight percent based on the total weight of solids contained in the agitated reactor.

In yet another embodiment the present invention provides a method of producing a resin-fortified emulsion polymer composition utilizing an emulsion polymerization reaction, wherein emulsion particles form as a result of the utilization of the emulsion polymerization reaction, the method characterized by the steps of: adding, to a reactor, water and an effective amount of a surfactant stabilizer for preventing coagulation of the emulsion particles; agitating the reactor contents and subjecting the reactor contents to an inert atmosphere; heating the agitated reactor contents to a predetermined reaction temperature; adding to the agitated reactor 1/50 to 1/10 of an emulsion-polymerizable monomer mixture comprising ethylenically unsaturated monomers selected from the group consisting of olefins, monovinylidene aromatics, alpha,beta-ethylenically unsaturated carboxylic acids and esters thereof, ethylenically unsaturated dicarboxylic anhydrides, and halo substituted olefinics; thereafter adding to the monomer-containing agitated reactor an effective amount of an initiator for initiating the emulsion polymerization reaction; maintaining the agitated initiator-containing reactor contents at the reaction temperature for a time period of about 5 minutes; adding to the initiator-containing agitated reactor, over a 1 to a 2 hour period of time, the remainder of the monomer mixture; adding to the reactor, up to an hour after the remainder of the monomer mixture has been added thereto, an effective amount of a low molecular weight resin, soluble or dispersable in water or in alkali, for effecting preselected flow characteristics of the emulsion polymer composition, wherein the number average molecular weight of the low molecular weight resin is 500 to 20,000; wherein said low molecular weight resin is prepared from ethylenically unsaturated monomers selected from at least one of olefins, monovinylidene aromatics, alpha,beta-ethylenically unsaturated carboxylic acids and esters thereof, ethylenically unsaturated dicarboxylic anhydrides, and mixtures thereof; and thereafter maintaining the reactor contents at the reaction temperature, with agitation, for a 1 to a 2 hour additional period of time, said low molecular weight resin being present in an amount of at least 2 weight percent based on the total weight of solids contained in the agitated reactor.

The resin is a low molecular weight polymer and is soluble or dispersible in water or alkali solutions. The resin is added to the reaction mixture during emulsion polymerization. i.e., after initiation of the emulsion polymerization reaction but before the polymerization reaction is substantially completed. The resulting resin-fortified emulsion polymers possess substantially Newtonian rheological properties, improved stability and good pigment dispersity and wetting properties.

The resins are added to the emulsion polymerization reaction mixture as solutions, solids such as flakes or granules), or as slurries (suspension of solids in water). When the resin is added as a solid, either as a flake, granular or slurry, then an alkaline material is added to the reaction mixture in quantities sufficient to solubilize the resin. The monomer component of the emulsion polymerization reaction can be introduced into the reaction mixture all at once or portions of the monomer component can be added to the reaction mixture at various times. i.e., multistage monomer addition. In either case, the monomers are usually added to the reaction mixture slowly over a 1,2 hour to 2 hour period.

When used herein the term "emulsion polymer" refers to any polymer prepared by emulsion polymerization. Such polymers are formed by the polymerization of one or more monomers capable of undergoing free radical emulsion polymerization. When used herein the term "resin" encompasses all low molecular weight resins of from about 500 to about 20,000, and preferably about 500 to 10,000, number average molecular weight which are soluble or dispersible in water or alkali.

In practicing the present invention, emulsion polymerization is conducted wherein a low molecular weight resin is added to an emulsion polymerization reaction mixture during the emulsion polymerization reaction. The resin is added to the emulsion polymerization reaction mixture after polymerization has been initiated but before the emulsion polymerization reaction is substantially complete. The resin can be added as a solid, a solution or slurry. The monomers employed in the emulsion polymerization reaction can be added to the reaction mixture in a single stage or, alternatively, can be added to the reaction mixture in a multistage addition.

In conducting the present emulsion polymerization reaction standard emulsion polymerization techniques are employed with the exception of the in situ resin addition. Standard nonionic and anionic surfactants are employed in the reaction. Advantageously, the reaction is conducted at an elevated temperature of from about 60 to about 100°C., at ambient pressure and under an inert atmosphere such as nitrogen. The reaction mixture is maintained under agitation employing standard mixing techniques.

Before the resin is added to the emulsion polymerization reaction mixture there must be a polymeric (or steric) stabilizer present in the reaction mixture to prevent coagulation of the emulsion particles. The stabilizer can be any of the conventional nonionic surfactants such as ethoxylated alkylphenols including ethoxylated nonylpnenol having at least 20 ethylene oxide units, ethoxylated octylphenol having at least 20 ethylene oxide units or, alternatively, functional monomers such as acrylic acid, methacrylic acid or polyethylene glycol monomethacrylate. The stabilizer is added to the reaction mixture prior to resin addition and usually in amounts of from about 1 to about 8 percent by weight of the reaction mixture and preferably from about 2 to about 4 weight percent.

The resins are added to the emulsion polymerization reaction mixture as solutions, solids (flakes or granulars) or as slurries. When the resin is added as a solid then a sufficient amount of alkaline material must be added to the reaction mixture in order to solubilize the resin. The method of addition of the resin to the reaction mixture is not critical to the practice of the present invention and may be introduced into the reaction mixture all at once or in portions over time during the emulsion polymerization reaction.

The monomers employed in the emulsion polymerization are preferably added to the reaction mixture in two or more stages. Typically, a small amount of monomer mix is added to the water surfactant mixture with agitation. Thereafter the initiator is added to the reaction mixture followed by the addition of another portion of the monomer mix and the steric stabilizer. The polymerization reaction is then allowed to start. After the polymerization reaction has started, the low molecular weight resin is then added to the reaction mixture. After the addition of the resin, the balance of the monomer mix is added to the reactor and the emulsion polymerization reaction is allowed to be completed.

Suitable low molecular weight support resins employed in the practice of the present invention include any solution or bulk polymerization polymers prepared from ethylenically unsaturated monomers selected from at least one of olefins, monovinylidene aromatics, alpha, beta-ethylenically unsaturated carboxylic acids and esters thereof and ethylenically unsaturated dicarboxylic anhydrides, and mixtures thereof. They are known materials and are prepared employing standard solution polymerization techniques. Preferably, the support resins are prepared in accordance with the teachings of U.S. Patent 4,414,370, U.S. Patent 4,529,787 and U.S. Patent 4,546,160 all of which are incorporated herein reference.

Suitable monomers employed in the preparation of the support resins include acrylic acid, methacrylic acid, styrene, alphamethylstyrene, hydroxyethylmethacrylate and esters of acrylic acid and methacrylic acid.

Preferred support resins include those resins containing Styrene (ST), alpha methylstyrene (AMS), acrylic acid (AA) and mixtures thereof. An especially preferred support resin is a ST.AA copolymer containing three parts ST and one part AA and which has a number average molecular weight of from about 1,000 to about 6.000 and, preferably, from 2,000 to about 4,000.

Suitable monomers employed in the preparation of the present emulsion polymers include ethylenically unsaturated monomers selected from olefins, mono vinylidene aromatics, alpha, beta-ethylenically unsaturated carboxylic acids and esters thereof, ethylenically unsaturated dicarboxylic anhydrides and halo substituted olefinics. Suitable monomers include styrene (ST), alphamethylstyrene (AMS), acrylic acid (AA), methacrylic acid (MAA), methylmethacrylate (MMA), butylmethacrylate (BMA), butylacrylate (BA), 2-ethylhexylacrylate (2-EHA), ethylacrylate (EA), hydroxyethylacrylate (HEA) and hydroxyethylmethacrylate (HEMA).

As noted above, the resins useful in the process of the present invention should have a low molecular weight with a number average molecular weight in the range of from about 500 to about 20,000, preferably about 500 to about 10,000 and optimally about 2,000 to about 4,000. Also the resins must be water soluble or water dispersable either as is or in an alkaline medium such as ammonium hydroxide.

In one embodiment of the present invention, water and a sufficient amount of surfactant are added to a reactor under an inert atmosphere and brought to reaction temperature. The monomer mixture and the initiator are then co-fed into the reactor with agitation. The monomer mixture may be added all at once, or, alternatively, it can be fed into the reactor over an extended period of time, i.e., 1-2 hours. After the initiator addition, a low molecular weight resin is then added to the reaction mixture during the polymerization process. The resin can be added to the reaction mixture as a solid or a solution. When the resin is added as a solid, an alkali (aqueous NH40H) is added to the reaction mixture with the solid resin or after the addition of the solid resin. The time at which the support resin is added to the reaction mixture is not critical to the practice of the present invention, however, it is preferred that the reaction of the monomers be at least about 30%, preferably about 30 to 50%, complete before the resin is added to the reaction mixture. The support resin can be added immediately after the addition of the initiator and anytime up to an hour after the monomer mixture and initiator have been added to the reaction mixture.

In another embodiment of the present invention, water and sufficient amount of surfactant are added to a reactor under an inert atmosphere and brought to reaction temperature. A minor portion (0.1-15% by weight) of the monomer mixture to be used in the emulsion polymerization reaction is added to the reactor followed by the addition of an initiator. A second portion (25-90 weight percent) of the monomer mixture is then added slowly over a 1 to 2 hour period to the reaction mixture. After the addition of this second portion of monomer, the support resin is added to the reaction mixture as either a solid of a solution. After the addition of the resin, a third portion (5-75 percent by weight) of the monomer mixture is then added slowly to the reaction mixture over a 1/4 to 1 hour period. If the support resin is added as a solid then aqueous alkali is simultaneously added to the reactor during the addition of the third portion of monomer mixture. The reaction is then held at reaction temperature with agitation for an additional 1 to 2 hour period.

In another embodiment of the present invention, water and a sufficient amount of surfactant are added, to a reactor under an inert atmosphere and brought to the reaction temperature. A minor portion (1/50-1/10) of the monomer mixture is added to the reactor followed by the addition of an initiator. The reaction is held for 5 minutes and then the balance of the monomer mixture is slowly added to the reactor over a 1 to 2 hour period. A support resin is then added to the reaction mixture anytime up to an hour after all of the monomer mixture has been added to the reactor. If the support resin is added as a solid, then a sufficient amount of alkali must be added to the reaction mixture to solubilize the solid resin. The reaction mixture is then held for an additional one to two hours at elevated temperature.

For those embodiments where the resin and alkali are added with some of the monomers, the precharge should contain all of the monomers, i.e., acid containing monomers such as acrylic acid which will be solubilized by the alkali. If this is not done, the acid functional monomer may go into the aqueous phase and will not be available for reaction with the monomers which are not water soluble.

The support resin is added to the present emulsion polymerization reaction in amounts of at least 2 weight percent or more based on the total weight of solids in the emulsion polymerization reaction mixture sufficient to modify the flow characteristics of the resulting emulsion polymer. Advantageously the support resin is added in amounts greater than about 5% and preferably greater than about 10% by total weight of solids in the emulsion reaction mixture. The optimum amount of support resin to be added during the emulsion polymerization reaction will depend on a variety of factors, such as, the particular makeup of the support resin, the particular makeup of the emulsion polymer, the end use application for the emulsion polymer, and the environment in which the emulsion polymer will be used in. One skilled in the art can readily determine the optimum amount of support resin to be used in a particular application by conducting routine experiments.

The following examples illustrate the practice of the present invention but should not be construed as limiting its scope.

EXAMPLE 1: Support Resin Preparation

The following support resins were prepared employing the bulk polymerization process described in U.S. Patent 4,529,787. The monomer content, number average molecular weight (Mn) and the weight average molecular weight are listed below:

|  | Monomers* | Monomer Ratio | Mn** | Mw |
|---|---|---|---|---|
| Resin A | ST/AMS/AA | 62ST/21AMS/17AA | 1740 | 3605 |
| Resin B | ST/AA | 75ST/25AA | 3270 | 8360 |
| Resin C | ST/AMS/AA | 31ST/37AMS/32AA | 3040 | 8430 |
| Resin D | ST/AMS/AA | 42ST/21AMS/37AA | 2060 | 4880 |

*ST = styrene, AMS = alphamethylstyrene, AA = acrylic acid Mn* molecular weight was determined by get permeation chromatography (GPC) using polystyrene as the standard.

EXAMPLE 2 Resin-fortified Emulsion Polymer 1-5

The Items A (water, surfactant), B(water. initiator), C (monomer mixture), D (resins from Example 1, E (monomer mixture) and F (aqueous $NH_4OH$) listed in Table 1 below were prepared by admixing the components of each item. Items A, B, C and E were purged with $N_2$ for over six (6) minutes. The resin-fortified emulsion polymers 1-5 were prepared by adding Item A to a reactor, and heating to a temperature of 80° C under a low stream of $N_2$. Ten (10) grams (g) of Item C were added to the reactor and stirred for one (1) minute. Item B (initiator) was added to the reactor with stirring. Four (4) minutes after the addition of Item B, the balance of Item C was added to the reactor over 40-60 minutes. Item D (resin) was added to the reactor with stirring. One minute after the addition of Item D. Items E and F were simultaneously added to the reactor with stirring. Item E was added over a 40-60 minute period while Item F was added over a 20-30 minute period. After Item E was added to the reactor, the reaction was maintained for an additional 40 minute period. The reaction mixture was cooled to room temperature and filtered through cheese cloth.

TABLE 1

ITEMS (Components* in grams)

| Resin-Fortified Emulsion Polymer | A | | | B | | C | | | | | | | | D | | E | | | | | F | |
|---|---|---|---|---|---|---|---|---|---|---|---|---|---|---|---|---|---|---|---|---|---|---|
| | H₂O | TX100 | NaLS | H₂O | *APS | ST | MMA | 2EHA | BMA | BA | MAA | AA | TX100 | RESIN B | RESIN A | ST | MMA | 2EHA | BMA | BA | H₂O | NH₄OH |
| 1 | 331 | 0.56 | 2.80 | 36.8 | 1.12 | 84 | 65.1 | 58.9 | - | - | 10.6 | - | - | 64 | - | 36.8 | 28.5 | 25.7 | - | - | 34.0 | 16.8 |
| 2 | 380 | 0.50 | 3.0 | 30 | 1.2 | - | - | - | 230 | - | 8 | - | - | 35 | - | - | - | - | 120 | - | 20 | 12 |
| 3 | 380 | 0.50 | 3.0 | 30 | 1.2 | - | - | - | 230 | - | 8 | - | - | 8.75 | - | - | - | - | 120 | - | 20 | 6.8 |
| 4 | 300 | 0.56 | 3.5 | 30 | 1.2 | - | 196 | - | - | - | 49 | 4 | - | 17 | - | - | 80 | - | - | 20 | 20 | 8 |
| 5 | 270 | - | 3.0 | 20 | 1.4 | 32 | 64 | - | - | 64 | 1.6 | 1.2 | 3.0 | 96 | 25.6 | 160 | - | - | - | - | 110 | 16 |

*APS = Ammonium persulfate

TX100 = TRITON X-100

NaLS = sodium lauryl sulfate

ST = Styrene

MMA = methyl methacrylate

2EHA = 2 ethylhexylacrylate

BA = butyl acrylate

MAA = methacrylic acid

AA = acrylic acid

EXAMPLE 3: Resin-Fortified Emulsion Polymers 6 & 7

The Items A (water, surfactant), B (water, initiator), C (monomer), D (water, surfactant), E (monomer), F (resins from Example 1) and G (aqueous $NH_4OH$) listed in TABLE 2 below were prepared by admixing the components of each item. Items A, B, C and E were purged with $N_2$ for six (6) minutes. The resin-fortified emulsion polymers 6 and 7 were prepared by adding Item A into a reactor and heating to a temperature of 80 ° C under a slow stream of $N_2$. Ten (10)g of Item C were added to the reactor and stirred for one minute. Item B was added to the reactor. Five (5) minutes after the addition of Item B, Item D and 20g of Item C were simultaneously added to the reactor over a 7-10 minute period. Item E was then added to the reactor over a 50-60 minute period. Then Item F (the resin) was added to the reactor followed one minute later with the addition of Items C and G. Item C was added over a 30-50 minute period while Item G was added over a 20-30 minute period. After all of Item C was added to the reactor, the reaction mixture was maintained at 80 ° C with stirring for an additional 40 minutes. The reaction mixture was cooled to room temperature and filtered through cheese cloth.

TABLE 2

ITEMS (Components* in grams)

| Resin-Fortified Emulsion Polymer | A | | B | | C | | | D | | | E | | | | F | | G | |
|---|---|---|---|---|---|---|---|---|---|---|---|---|---|---|---|---|---|---|
| | H₂O | DS10 | H₂O | APS | MMA | ST | 2EHA | H₂O | NaSS | TX100 | MMA | ST | 2EHA | HEM10 | Resin B | Resin A | H₂O | NH₄OH |
| 6 | 350 | 3.5 | 30 | 1.3 | 50.2 | 64.6 | 45.2 | 35 | 0.6 | 1.0 | 62.8 | 80.8 | 56.5 | 8 | 37.4 | – | 30 | 13 |
| 7 | 350 | 3.5 | 30 | 1.3 | 50.2 | 64.6 | 45.2 | 35 | 0.6 | 1.0 | 62.8 | 80.8 | 56.5 | 8 | – | 37.4 | 30 | 13 |

* DS10 = sodium nonylphenyl sulfonate

NaSS = sodium styryl sulfonate

HEM10 = polyethylene glycol monomethacrylate (10 moles PEG) ALCOLAC

EXAMPLE 4: Resin-Fortified Emulsion Polymers 8-11

The Items A (water, surfactant), B (water, initiator), C (monomers), D (water, surfactant), E (monomers) and F (resin solution) listed in TABLE 3 below were prepared by admixing the components of each item. The resin solution

9

was the resin listed plus deionized water and sufficient ammonium hydroxide to bring the pH to about 9 to solubilize the resin. Items A, B, C, D and E were purged with $N_2$ for over 6 minutes. The resin-fortified emulsion polymers 8-11 were prepared by adding Item A to a reactor and heating to 80 ° C under a slow stream of $N_2$. Ten (10)g of Item C were added to the reactor with stirring and after one minute Item B were added to the reactor. Five (5) minutes after the addition of Item B, Item D and 20g of Item C were simultaneously added to the reactor over a 7-10 minute period. Item E was then added to the reactor over a 50-60 minute period. After the addition of Item E, Items C and F were simultaneously added to the reactor. Item C was added to the reactor over a 30-50 minute period while Item F was added to the reactor over a 20-30 minute period. After all of Item C was added to the reactor, the reaction mixture was maintained at 80 ° C with stirring for an additional 40 minutes. The reaction mixture was cooled to room temperature and filtered through cheese cloth.

## TABLE 3
### ITEMS (Components* in grams)

| Resin-fortified Emulsion Polymer | A | | | B | | C | | | D | | E | | | | | F |
|---|---|---|---|---|---|---|---|---|---|---|---|---|---|---|---|---|
| | H₂O | TX100 | DX10 | H₂O | APS | MMA | ST | 2EHA | H₂O | NaSS | MMA | ST | 2EHA | HEM10 | HEM5 | Resin Ammonium Solutions |
| 8 | 310 | 0.5 | 2.5 | 40 | 1.3 | 50.2 | 64.6 | 45.2 | 40 | 0.6 | 62.8 | 80.8 | 56.5 | 6 | - | 80 (Resin A; 11.3% solid) |
| 9 | 310 | 0.5 | 2.5 | 40 | 1.3 | 50.2 | 64.6 | 45.2 | 40 | 0.6 | 62.8 | 80.8 | 56.5 | 6 | - | 80 (Resin C; 11.3% solid) |
| 10 | 310 | 0.5 | 2.5 | 40 | 1.3 | 50.2 | 64.6 | 45.2 | 40 | 0.6 | 62.8 | 80.8 | 56.5 | 6 | - | 80 (Resin D; 11.3% solid) |
| 11 | 310 | 0.5 | 30 | 30 | 1.3 | 50.2 | 64.6 | 45.2 | 40 | 0.6 | 62.8 | 80.8 | 56.5 | - | 12 | 100 (Resin B; 30% solid) |

EXAMPLE 5: Resin-Fortified Emulsion Polymers 12-15

The Items A (water, surfactant), B (water, initiator), C (monomers), D (monomers), E (resin solution, NH₄OH) and F (styrene) listed in TABLE 4 below, were prepared by admixing the components of each item. Items A, B, C, D and F

were purged with $N_2$ for over 6 minutes. Resin-fortified emulsion polymers 12-15 were prepared by adding Item A to a reactor and heating to a temperature of 80 ° C under a slow stream of $N_2$. Ten (10)g of Item C were added to the reactor with stirring and then one minute later Item B was added. Four minutes after the addition of Item B, the rest of Item C was added to the reactor over a 15-20 minute period. Item D was then added to the reactor over a 30-35 minute period. Five minutes after the addition of Item D, Items E and F were simultaneously added to the reactor. Item E was added to the reactor over a 30-35 minute period while Item F was added over a 40-50 minute period. The reaction mixture was maintained at 80 ° C with stirring for 40 minutes after all of Item F had been added to the reactor. The reaction mixture was then cooled to room temperature and filtered through cheese cloth.

TABLE 4

ITEMS (Components* in grams)

| Resin-Fortified Emulsion Polymers | A | | B | | C | | D | | | E | | F |
|---|---|---|---|---|---|---|---|---|---|---|---|---|
| | $H_2O$ | NaLS | $H_2O$ | APS | MONOMERS* | MAA | MONOMERS* | MAA | HEMS | RESIN SOLUTION | $NH_4OH$ | ST |
| 12 | 260 | 30 | 16 | 1.4 | 60 | 1.8 | 100 | 11 | 5 | 156(Resin C;20.5%) | 5 | 160 |
| 13 • | 260 | 30 | 16 | 1.4 | 60 | 1.8 | 100 | 11 | 5 | 156(Resin B;20.5%) | 5 | 160 |
| 14 | 260 | 30 | 16 | 1.4 | 60 | 1.8 | 100 | 11 | 5 | 156(Resin D;20.5%) | 5 | 160 |
| 15 | 260 | 30 | 16 | 1.4 | 60 | 1.8 | 100 | 11 | 5 | 237(Resin A;13.5%) | 5 | 160 |

*Monomers = MMA/St/BA/EA/TX100 = 20/50/20/10/1.8 (wt.%)

12

EXAMPLE 6: Resin-fortified Emulsion Polymer 16-20

The Items A (water, surfactant), B (water, initiator), C (monomers with stabilizer). D (resin), E (monomers) and F (aqueous $NH_4OH$) listed in TABLE 5 below were prepared by admixing the components of each item. Items A, B, C and E were purged with $N_2$ for 6 minutes. The resin-fortified emulsion polymers 16-20 were prepared by adding Item A to a reactor and heating to a temperature between 75 ° C and 80 ° C under a slow stream of $N_2$. One-twentieth (1/20) of Item C was added to the reactor, with stirring, followed by the addition of Item B to initiate the polymerization reaction. Five (5) minutes after the addition of Item B, the balance of Item C was added to the reactor over a 1/2 hour period. Items D, E and F, when F was employed, were added to the reactor in three different procedures as follows:

Procedure 1: For resin-fortified emulsions 16 and 18, Item D was added to the reactor as solid flakes. Items E and F were simultaneously added to the reactor over a 1/2 hour period. The reaction was then allowed to continue for one hour at 75-80 ° C with stirring.

Procedure 2: For resin-fortified emulsions 17 and 19, Items E and D were simultaneously added to the reactor over a 1/2 hour period. The reaction was then allowed to continue for one hour at 75-80 ° C with stirring.

Procedure 3: For resin-fortified emulsion 20, Item D (flakes) was added to the reactor 40 minutes after the addition of all of Item C. Item F was then added to the reactor over a 1/2 hour period. The reaction was allowed to continue for one hour at 60 ° C with stirring.

TABLE 5

ITEMS (Components* in grams)

| Resin-Fortified Emulsion Polymer | H₂O | TX100 | A NaLS | DS10 | NaSS | B H₂O | APS | MONOMERS | MAA | C HEM10 | HEM20 | TX100 | D RESIN (from Example 1) | E MONOMERS | H₂O | F NH₄OH(28%) |
|---|---|---|---|---|---|---|---|---|---|---|---|---|---|---|---|---|
| 16 | 41.4 | 0.07 | 0.35 | - | - | 4.61 | 0.140 | 26.0 | 1.33 | - | - | - | B 8.0 (flake) | 11.4 | 4.26 | 2.11 |
| 17 | 42.45 | 0.07 | 0.438 | - | - | 3.753 | 0.150 | 27.53 | 0.751 | - | - | 0.375 | A 9.41 (23% sol.) | 15.01 | - | - |
| 18 | 40.29 | 0.06 | - | 0.476 | 0.077 | 3.574 | 0.154 | 27.4 | - | 0.714 | - | - | D 2.40 (flake) | 23.83 | - | 0.83 |
| 19 | 37.62 | 0.057 | - | 0.342 | 0.068 | 3.42 | 0.148 | 21.65 | - | 0.912 | - | - | A 21.0 (17% sol.) | 19.38 | - | - |
| 20 | 46.55 | 0.059 | - | 0.591 | 0.0829 | 3.555 | 0.213 | 33.79 | - | - | 0.711 | - | C 12.0 (flake) | 3.55 | - | 3.7 |

* DS10 = Siponate DS 10

NaSS = Spinomer Na SS

Monomers = Polymer of ST/MMA/BA/BMA/2EHA/EA

HEM10 = Polyethylene glycol monomethacrylate (20 moles PEG)

EXAMPLE 7

A resin cut having the following formulation was prepared:

| Resin Cut A | |
|---|---|
| | Parts by Weight |
| Deionized water | 74.516 |
| Ethoxylated octylphenol (40 moles ethylene oxide) Triton X-405 (70% solids) | 1.652 |
| Ammonium Hydroxide | 3.188 |
| Resin A Flakes (Example 1) | 16.515 |
| Resin B Flakes (Example 1) | 4.129 |
| | 100.000 |

Resin Cut A was prepared by charging the water, Triton X-405 and ammonium hydroxide into a vessel at ambient temperature. The Resin A & B Flakes were sifted in with moderate agitation. The temperature was raised to 70 ° C and increased agitation when the mixture reaches 70 ° C. Hold with agitation for about 30 minutes at 70 ° C. Cool to less than 37 ° C and filter. Store in a sealed contained to prevent ammonia loss.

An emulsion polymer having the following components was prepared:

| | Parts by Weight |
|---|---|
| Initial Flask Charge: | |
| Deionized Water | 22.978 |
| Sodium Lauryl Sulfate (15% Actives) | 2.182 |
| Ethoxylated Octylphenol (10 moles ethylene oxide) (Triton X-100) | 0.245 |
| | 25.405 |
| Ammonium Persulfate Charge: | |
| Deionized Water | 1.608 |
| Ammonium Persulfate | 0.225 |
| | 1.823 |
| First Stage Monomer Charge: | |
| Styrene | 5.402 |
| Methylmethacrylate | 1.688 |
| Butylacrylate | 1.351 |
| Methacrylic Acid | 0.717 |
| | 9.158 |
| Resin Cut A (21.8% Solids) | 29.727 |
| Second Stage Monomer Charge: | |
| Styrene | 20.322 |
| Methylmethacrylate | 6.351 |
| Butylacrylate | 5.081 |
| | 31.754 |
| Post Hold Ammonia Charge: | |
| Deionized water | 1.608 |
| Ammonium Hydroxide | 0.505 |
| | 2.113 |
| Preservative (Kathon LX-14) | 0.010 |
| | 100.000 |

The Initial Flask Charge was heated to 79 ° C with mild agitation and a mild nitrogen purge. About 10% of the First Stage Monomer Charge was added followed immediately by the Ammonium Persulfate Charge. This was held for about 20 minutes to build a radical flux. The remaining First Stage Monomer Charge was added incrementally over about 30 minutes followed by a 10 minute hold. Resin Cut A was then added incrementally over about 30 minutes and was followed immediately by the addition of the Second Stage Monomer Charge incrementally over about 80 minutes. Agitation was increased 25-50% during the last 25 minutes of the Second Stage Monomer Charge addition. After all monomers were added the mixture was held for about 60 minutes. At this point, the Post Hold Ammonia Charge was added and the mixture was cooled to 37 ° C. The pH should be in the range of 9.3 to 9.6. The preservative was then added and the product was filled into suitable containers.

EXAMPLE 8

The following emulsion polymer was prepared:

A:

Deionized Water 90g
Sodium Lauryl Sulfate 1.2 g

B:

Deionized Water 20 g
Ammonium Persulfate 0.8 g

C:

Methacrylate 23.5 g
Styrene 30.3 g
2-Ethylhexylacrylate 21.2 g
Ethoxylated Octylphenol (10 moles ethylene oxide)(Triton X-100-100% solids) 2.25 g
Methacrylic Acid 4.5 g

D:

Deionized Water 20 g
Ammonium Hydroxide (28%) 6 g

E:

Methylmethacrylate 23.5 g
Styrene 30.3 g
2-Ethylhexylacrylate 21.2 g

F:

Resin B Aqueous Ammonia Cut (18.29% solids)
(pH = 9) 85 g

Each of Items A through F were prepared by mixing the components and purging with nitrogen for 6 minutes. Solution F includes sufficient Resin B, deionized water and ammonia hydroxide to produce a 18.29% solution (of Resin B) at a pH of 9. Item A was added to the reaction and heated to 80 ° C under a slow stream of nitrogen. 10 g of Item C were added to the reactor and stirred for 1 minute. Then Item B was added and the reaction was held for 10 minutes. The rest of Item C was added over 25 to 30 minutes. This was followed by addition of Item D over 5 minutes and held for 5 minutes. Items E & F were added simultaneously over a period of 40-50 minutes for Item E and 25-35 minutes for Item F. After Item E was added, the reaction was held for one hour at 80 ° C and then cooled to room temperature and filtered.

Similar resin-fortified emulsion polymers are prepared when various monomers are employed in an emulsion polymerization reaction when various support resins, described herein, are added to the emulsion polymerization reaction mixture during the polymerization reaction. The resulting resin-fortified emulsion polymers possess substantially Newtonian-like rheological characteristics. These resin fortified polymers are also stable and have good pigment dispersity and wetting characteristics.

The resin-fortified emulsion polymers of the present invention are useful in any of the standard applications for emulsion polymers. Typical use applications for the present resin-fortified emulsion polymers include coatings, and graphic arts.

Of particular interest in the practice of the present invention the resin fortified emulsion polymer described in Example 7 is employed as a formaldehyde-free coating for wood. The emulsion polymer is applied to the wood substrate employing standard application techniques.

## Claims

1. A method of producing a resin-fortified emulsion polymer composition utilizing an emulsion polymerization reaction, wherein emulsion particles form as a result of the utilization of the emulsion polymerization reaction, the method characterized by the steps of: adding, to a reactor, water and a portion of an effective amount of a surfactant stabilizer for preventing coagulation of the emulsion particles; agitating the reactor contents and subjecting the reactor contents to an inert atmosphere; heating the agitated reactor contents to a predetermined reaction temperature; adding to the agitated reactor a first portion of an emulsion-polymerizable monomer mixture comprising ethylenically unsaturated monomers selected from the group consisting of olefins, monovinylidene aromatics, alpha,beta-ethylenically unsaturated carboxylic acids and esters thereof, ethylenically unsaturated dicarboxylic anhydrides, and halo substituted olefinics; adding to the monomer-containing agitated reactor an effective amount of an initiator for initiating the emulsion polymerization reaction; adding to the initiator-containing agitation reactor a second portion of the monomer mixture together with the remainder of the surfactant stabilizer; thereafter adding to the agitated reactor an effective amount of a low molecular weight resin soluble or dispersable in water or in alkali, for effecting preselected flow characteristics of the emulsion polymer composition, wherein the number average molecular weight of the low molecular weight resin is 500 to 20,000; wherein said low molecular weight resin is prepared from ethylenically unsaturated monomers selected from at least one of olefins, monovinylidene aromatics, alpha,beta-ethylenically unsaturated carboxylic acids and esters thereof, ethylenically unsaturated dicarboxylic anhydrides, and mixtures thereof; and adding to the resin-containing agitated reactor contents the remainder of the monomer mixture, said low molecular weight resin being present in an amount of at least 2 weight percent based on the total weight of solids contained in the agitated reactor.

2. The method of claim 1, characterized in that the surfactant stabilizer is a nonionic surfactant, preferably an ethoxylated alkylphenol selected from the group consisting of ethoxylated nonylphenol and ethoxylated octylphenol, each such ethoxylated alkylphenol having at least 20 ethylene oxide units: or an acrylic-based functional monomer, preferably selected from the group consisting of acrylic acid, methacrylic acid, and polyethylene glycol monomethacrylate.

3. The method of claims 1 or 2, characterized in that the surfactant stabilizer is present in the reaction mixture in an amount of from 1 to 8 percent weight, preferably 2 to 4 weight percent, based upon the weight of the reaction mixture.

4. The method of claims 1, 2 or 3, characterized in that the predetermined reaction temperature is 60 to 100°C, and wherein the inert atmosphere is nitrogen.

5. The method of any of claims 1-4, characterized in that the ethylenically unsaturated monomers of the monomer mixture are selected from the group consisting of styrene, alpha-methyl styrene, acrylic acid, methacrylic acid, methymethacrylate, butylmethacrylate, butylacrylate, 2-ethyl hexylacrylate, ethylacrylate, hdroxyethylacrylate, and hydroxyethylmethacrylate.

6. The method of any preceding claim, characterized in that the ethylenically unsaturated monomers that are utilized to make the low molecular weight resin are selected from the group consisting of acrylic acid, methacrylic acid, styrene, alpha-methylstyrene, hydroxyethyl methacrylate and esters of acrylic acid and methacrylic acid, and preferably, styrene, alphamethylstyrene, acrylic acid and mixtures thereof.

7. The method of any one of claims 1-6, characterized in that the low molecular weight resin is a copolymer of styrene and acrylic acid, preferably in a ratio of three parts styrene and one part acrylic acid, and has a number average molecular weight of 1,000 to 6,000, preferably 2,000 to 4,000.

8. The resin-fortified emulsion polymer composition characterized by preparation in accordance with any of claims 1-7.

9. A method of producing a resin-fortified emulsion polymer composition utilizing an emulsion polymerization reaction, wherein emulsion particles form as a result of the utilization of the emulsion polymerization reaction, the method characterized by the steps of: adding, to a reactor, water and an effective amount of a surfactant stabilizer for preventing coagulation of the emulsion particles; agitating the reactor contents and subjecting the reactor contents to an inert atmosphere; heating the agitated reactor contents to a predetermined reaction temperature; Do-feeding into the agitated reactor (1) an emulsion-polymerizable monomer mixture comprising ethylenically unsaturated monomers selected from the group consisting of olefins, monovinylidene aromatics, alpha,beta-ethylenically unsaturated carboxylic acids and esters thereof, ethylenically unsaturated dicarboxylic anhydrides, and halo substituted olefinics, and (2) an effective amount of an initiator for initiating the emulsion polymerization reaction; and adding to the agitated reactor, after initiation of the emulsion polymerization reaction, an effective amount of a low molecular weight resin, soluble or dispersable in water or in alkali, for effecting preselected flow characteristics of the emulsion polymer composition, wherein the number average molecular weight of the low molecular weight resin is 500 to 20,000, wherein said low molecular weight resin is prepared from ethylenically unsaturated monomers selected from at least one of olefins, monovinlyidene aromatics, alpha,beta-ethylenically unsaturated carboxylic acids and esters thereof, ethylenically unsaturated dicarboxylic anhydrides, and mixtures thereof; said low molecular weight resin being present in an amount of at least 2 weight percent based on the total weight of solids contained in the agitated reactor, and wherein said low molecular weight resin is added anytime up to an hour after the monomer mixture and the initiator have been added to the reaction mixture.

10. The resin-fortified emulsion polymer composition characterized by preparation in accordance with claim 9.

11. A method of producing a resin-fortified emulsion polymer composition utilizing an emulsion polymerization reaction, wherein emulsion particles form as a result of the utilization of the emulsion polymerization reaction, the method characterized by the steps of: adding, to a reactor, water and an effective amount of a surfactant stabilizer for preventing coagulation of the emulsion particles; agitating the reactor contents and subjecting the reactor contents to an inert atmosphere; heating the agitated reactor contents to a predetermined reaction temperature; adding to the agitated reactor 0.1-15% by weight of an emulsion-polymerizable monomer mixture comprising ethylenically unsaturated monomers selected from the group consisting of olefins, monovinylidene aromatics, alpha,beta-ethylenically unsaturated carboxylic acids and esters thereof, ethylenically unsaturated dicarboxylic anhydrides, and halo substituted olefinics; adding to the monomer-containing agitated reactor an effective amount of an initiator for initiating the emulsion polymerization reaction; adding to the initiator-containing agitated reactor, over about a 1 to about a 2 hour period of time, 25-90% by weight of the monomer mixture; thereafter adding to the agitated reactor an effective amount of a low molecular weight resin, soluble or dispersable in water or in alkali, for effecting preselected flow characteristics of the emulsion polymer composition, wherein the number average molecular weight of the low molecular weight resin is 500 to 20,000, wherein said low molecular weight resin is prepared from ethylenically unsaturated monomers selected from at least one of olefins, monovinylidene aromatics, alpha, beta-ethylenically unsaturated carboxylic acids and esters thereof, ethylenically unsaturated dicarboxylic anhydrides, and mixtures thereof; adding, after completion of the resin-addition step, 5-75% by weight of the monomer mixture to the agitated reactor contents, over 1/4 to a 1 hour period of time; and thereafter maintaining the reactor contents at the reaction temperature, with agitation, for a 1 to 2 hour additional period of time, said low molecular weight resin being present in an amount of at least 2 weight percent based on the total weight of solids contained in the agitated reactor.

12. The resin-fortified emulsion polymer composition characterized by preparation in accordance with claim 11.

13. A method of producing a resin-fortified emulsion polymer composition utilizing an emulsion polymerization reaction, wherein emulsion particles form as a result of the utilization of the emulsion polymerization reaction, the method characterized by the steps of: adding, to a reactor, water and an effective amount of a surfactant stabilizer for preventing coagulation of the emulsion particles; agitating the reactor contents and subjecting the reactor contents to an inert atmosphere; heating the agitated reactor contents to a predetermined reaction temperature; adding to the agitated reactor 1/50 to 1/10 of an emulsion-polymerizable monomer mixture comprising ethylenically unsaturated monomers selected from the group consisting of olefins, monovinylidene aromatics, alpha,beta-ethylenically unsaturated carboxylic acids and esters thereof, ethylenically unsaturated dicarboxylic anhydrides, and halo substituted olefinics; thereafter adding to the monomer-containing agitated reactor an effective amount of an initiator for initiating the emulsion polymerization reaction; maintaining the agitated initiator-containing reactor contents at the reaction temperature for a time period of about 5 minutes; adding to the initiator-containing agitated reactor, over a 1 to a 2 hour period of time, the remainder of the monomer mixture; adding to the reactor, up to an hour after the remainder of the monomer mixture has been added thereto, an effective amount of a low molecular weight resin, soluble or dispersable in water or in alkali, for effecting preselected flow characteristics of the emulsion polymer composition, wherein the number average molecular weight of the low molecular weight resin is 500 to 20,000; wherein said low molecular weight resin is prepared from ethylenically unsaturated monomers selected from at least one of olefins, monovinylidene aromatics, alpha,beta-ethylenically unsaturated carboxylic acids and esters thereof, ethylenically unsaturated dicarboxylic anhydrides, and mixtures thereof; and thereafter maintaining the reactor contents at the reaction temperature, with agitation, for a 1 to a 2 hour additional period of time, said low molecular weight resin being present in an amount of at least 2 weight percent based on the total weight of solids contained in the agitated reactor.

**14.** The resin-fortified emulsion polymer composition characterized by preparation in accordance with claim 13.

**Patentansprüche**

1.  Verfahren zur Herstellung einer mit Harz versetzten Emulsionspolymerzusammensetzung unter Verwendung einer Emulsionspolymerisationsreaktion, wobei infolge der Verwendung der Emulsionspolymerisationsreaktion Emulsionspartikel entstehen und das Verfahren gekennzeichnet ist durch folgende Schritte: Zugabe von Wasser und einem Teil einer wirksamen Menge eines Tensidstabilisators in einen Reaktor zur Verhinderung der Koagulation der Emulsionspartikel; Rühren des Reaktorinhalts und Beaufschlagen des Reaktorinhalts mit einer inerten Atmosphäre; Aufheizen des gerührten Reaktorinhalts auf eine vorbestimmte Reaktionstemperatur; Versetzen des gerührten Reaktorinhalts mit einem ersten Teil einer emulsionspolymerisierbaren Monomermischung, welche ethylenisch ungesättigte Monomere enthält, die ausgewählt sind aus der Gruppe umfassend Olefine, Monovinylidenaromaten, $\alpha,\beta$-ethylenisch ungesättigte Carbonsäuren und Ester derselben, ethylenisch ungesättigte Dicarbonsäureanhydride, und halogensubstituierte Olefine; Versetzen des monomerhaltigen gerührten Reaktorinhalts mit einer wirksamen Menge eines Initiators, um die Emulsionspolymerisationsreaktion zu starten; Versetzen des initiatorhaltigen gerührten Reaktorinhalts mit einem zweiten Teil der Monomermischung zusammen mit dem Rest des Tensidstabilisators; anschließend Versetzen des gerührten Reaktorinhalts mit einer wirksamen Menge eines Harzes von niedrigem Molekulargewicht, welches in Wasser oder Alkali löslich oder dispergierbar ist, um vorgewählte Fließeigenschaften der Emulsionspolymerzusammensetzung zu erreichen, wobei das durchschnittliche Molekulargewicht des Harzes von niedrigem Molekulargewicht 500 bis 20.000 beträgt; wobei das Harz von niedrigem Molekulargewicht hergestellt wird aus ethylenisch ungesättigten Monomeren, die ausgewählt sind aus mindestens einem von Olefinen, Monovinylidenaromaten, $\alpha,\beta$-ethylenisch ungesättigten Carbonsäuren und Estern derselben, ethylenisch ungesättigten Dicarbonsäureanhydriden, und Mischungen derselben; und Versetzen des harzhaltigen gerührten Reaktorinhalts mit dem Rest der Monomermischung, wobei das Harz von niedrigem Molekulargewicht in einer Menge von mindestens 2 Gew.-% vorhanden ist, bezogen auf das Gesamtgewicht der in dem gerührten Reaktorinhalt enthaltenen Feststoffe.

2.  Verfahren nach Anspruch 1, dadurch gekennzeichnet, daß der Tensidstabilisator ein nichtionisches Tensid ist, vorzugsweise ein ethoxyliertes Alkylphenol, das ausgewählt ist aus der Gruppe umfassend ethoxyliertes Nonylphenol und ethoxyliertes octylphenol, wobei dieses ethoxylierte Alkylphenol mindestens 20 Ethylenoxideinheiten besitzt; oder ein funktionelles Monomer auf Acrylbasis, das vorzugsweise ausgewählt ist aus der Gruppe umfassend Acrylsäure, Methacrylsäure und Polyethylenglycolmonomethacrylat.

3.  Verfahren nach Anspruch 1 oder 2, dadurch gekennzeichnet, daß der Tensidstabilisator in dem Reaktionsgemisch vorhanden ist in einer Menge von 1 bis 8 Gew.-%, vorzugsweise 2 bis 4 Gew.-%, basierend auf dem Gewicht des Reaktionsgemisches.

4.  Verfahren nach Anspruch 1, 2 oder 3, dadurch gekennzeichnet, daß die vorbestimmte Reaktionstemperatur 60 bis 100 °C beträgt, und daß die inerte Atmosphäre Stickstoff ist.

5.  Verfahren nach einem der Ansprüche 1 bis 4, dadurch gekennzeichnet, daß die ethylenisch ungesättigten Monomere der Monomermischung ausgewählt sind aus der Gruppe umfassend Styol, A-Methylstyrol, Acrylsäure, Methacrylsäure, Methylmethacrylat, Butylmethacrylat, Butylacrylat, 2-Ethylhexylacrylat, Ethylacrylat, Hydroxyethylacrylat und Hydroxyethylmethacrylat.

6. Verfahren nach einem der vorhergehenden Ansprüche, dadurch gekennzeichnet, daß die ethylenisch ungesättigten Monomere, welche zur Herstellung des Harzes von niedrigem Molekulargewicht verwendet werden, ausgewählt sind aus der Gruppe umfassend Acrylsäure, Methacrylsäure, Styrol, α-Methylstyrol, Hydroxyethylmethacrylat und Ester von Acrylsäure und Methacrylsäure, und vorzugsweise Styrol, α-Methylstyrol, Acrylsäure und Mischungen derselben.

7. Verfahren nach einem der Ansprüche 1 bis 6, dadurch gekennzeichnet, daß das Harz von niedrigem Molekulargewicht ein Copolymer von Styrol und Acrylsäure ist, vorzugsweise in einem Verhältnis von drei Teilen Styrol und einem Teil Acrylsäure, und ein durchschnittliches Molekulargewicht von 1.000 bis 6.000, vorzugsweise 2.000 bis 4.000 besitzt.

8. Mit Harz versetzte Emulsionspolymerzusammensetzung, gekennzeichnet durch die Herstellung nach einem der Ansprüche 1 bis 7.

9. Verfahren zur Herstellung einer mit Harz versetzten Emulsionspolymerzusammensetzung unter Verwendung einer Emulsionspolymerisationsreaktion, wobei infolge der Verwendung der Emulsionspolymerisationsreaktion Emulsionspartikel entstehen und das Verfahren gekennzeichnet ist durch folgende Schritte: Zugabe von Wasser und einer wirksamen Menge eines Tensidstabilisators in einen Reaktor zur Verhinderung der Koagulation der Emulsionspartikel; Rühren des Reaktorinhalts und Beaufschlagen des Reaktorinhalts mit einer inerten Atmosphäre; Aufheizen des gerührten Reaktorinhalts auf eine vorbestimmte Reaktionstemperatur; gleichzeitiges Versetzen des gerührten Reaktorinhalts mit (1) einer emulsionspolymerisierbaren Monomermischung, umfassend ethylenisch ungesättigte Monomere, die ausgewählt sind aus der Gruppe umfassend Olefine, Monovinylidenaromaten, α,β-ethylenisch ungesättigte Carbonsäuren und Ester derselben, ethylenisch ungesättigte Dicarbonsäureanhydride, und halogensubstituierte Olefine; und mit (2) einer wirksamen Menge eines Initiators, um die Emulsionspolymerisationsreaktion zu starten, und nach dem Starten der Emulsionspolymerisationsreaktion Versetzen des gerührten Reaktorinhalts mit einer wirksamen Menge eines Harzes von niedrigem Molekulargewicht, welches in Wasser oder Alkali löslich oder dispergierbar ist, um vorgewählte Fließeigenschaften der Emulsionspolymerzusammensetzung zu erreichen, wobei das durchschnittliche Molekulargewicht des Harzes von niedrigem Molekulargewicht 500 bis 20.000 beträgt; wobei das Harz von niedrigem Molekulargewicht hergestellt wird aus ethylenisch ungesättigten Monomeren, die ausgewählt sind aus mindestens einem von Olefinen, Monovinylidenaromaten, α,β-ethylenisch ungesättigten Carbonsäuren und Estern derselben, ethylenisch ungesättigten Dicarbonsäureanhydriden, und Mischungen derselben; wobei das Harz von niedrigem Molekulargewicht in einer Menge von mindestens 2 Gew.-% vorhanden ist, bezogen auf das Gesamtgewicht der in dem gerührten Reaktorinhalt enthaltenen Feststoffe, und wobei das Harz von niedrigem Molekulargewicht zu jeder Zeit zugesetzt wird bis zu einer Stunde nach dem Versetzen der Reaktionsmischung mit der Monomermischung und dem Initiator.

10. Mit Harz versetzte Emulsionspolymerzusammensetzung, gekennzeichnet durch die Herstellung nach Anspruch 9.

11. Verfahren zur Herstellung einer mit Harz versetzten Emulsionspolymerzusammensetzung unter Verwendung einer Emulsionspolymerisationsreaktion, wobei infolge der Verwendung der Emulsionspolymerisationsreaktion Emulsionspartikel entstehen, wobei das Verfahren gekennzeichnet ist durch folgende Schritte: Zugabe von Wasser und einem Teil einer wirksamen Menge eines Tensidstabilisators in einen Reaktor zur Verhinderung der Koagulation der Emulsionspartikel; Rühren des Reaktorinhalts und Beaufschlagen des Reaktorinhalts mit einer inerten Atmosphäre; Aufheizen des gerührten Reaktorinhalts auf eine vorbestimmte Reaktionstemperatur; Versetzen des gerührten Reaktorinhalts mit 0,1 bis 15 Gew.-% einer emulsionspolymerisierbaren Monomermischung, welche ethylenisch ungesättigte Monomere enthält, die ausgewählt sind aus der Gruppe umfassend Olefine, Monovinylidenaromaten, α,β-ethylenisch ungesättigte Carbonsäuren und Ester derselben, ethylenisch ungesättigte Dicarbonsäureanhydride, und halogensubstituierte Olefine; Versetzen des monomerhaltigen gerührten Reaktorinhalts mit einer wirksamen Menge eines Initiators, um die Emulsionspolymerisationsreaktion zu starten; Versetzen des initiatorhaltigen gerührten Reaktorinhalts über einen Zeitraum von etwa 1 bis etwa 2 Stunden mit 25 bis 90 Gew.-% der Monomermischung; anschließend Versetzen des gerührten Reaktorinhalts mit einer wirksamen Menge eines Harzes von niedrigem Molekulargewicht, welches in Wasser oder Alkali löslich oder dispergierbar ist, um vorgewählte Fließeigenschaften der Emulsionspolymerzusammensetzung zu erreichen, wobei das durchschnittliche Molekulargewicht des Harzes von niedrigem Molekulargewicht 500 bis 20.000 beträgt; wobei das Harz von niedrigem Molekulargewicht hergestellt wird aus ethylenisch ungesättigten Monomeren, die ausgewählt sind aus mindestens einem von Olefinen, Monovinylidenaromaten, α,β-ethylenisch ungesättigten Carbonsäuren und Estern derselben, ethylenisch ungesättigten Dicarbonsäureanhydriden, und Mischungen derselben; und nach Beendigung des Harzzusetzungsschritts Versetzen des harzhaltigen gerührten Reaktorinhalts mit 5 bis 75 Gew.-% der Monomermischung über einen Zeitraum von 1/4-Stunde bis zu 1 Stunde; und anschließend Halten des Reaktorinhalts über einen weiteren Zeitraum von 1 bis 2 Stunden auf der Reaktionstemperatur unter Rühren, wobei das Harz von niedrigem Molekulargewicht in einer Menge von mindestens 2 Gew.-% vorhanden ist, bezogen auf das Gesamtgewicht der in dem gerührten Reaktorinhalt enthaltenen Feststoffe.

**12.** Mit Harz versetzte Emulsionspolymerzusammensetzung, gekennzeichnet durch die Herstellung nach Anspruch 11.

**13.** Verfahren zur Herstellung einer mit Harz versetzten Emulsionspolymerzusammensetzung unter Verwendung einer Emulsionspolymerisationsreaktion, wobei infolge der Verwendung der Emulsionspolymerisationsreaktion Emulsionspartikel entstehen, wobei das Verfahren gekennzeichnet ist durch folgende Schritte: Zugabe von Wasser und einer wirksamen Menge eines Tensidstabilisators in einen Reaktor zur Verhinderung der Koagulation der Emulsionspartikel; Rühren des Reaktorinhalts und Beaufschlagen des Reaktorinhalts mit einer inerten Atmosphäre; Aufheizen des gerührten Reaktorinhalts auf eine vorbestimmte Reaktionstemperatur; Versetzen des gerührten Reaktorinhalts mit 1/50 bis 1/10 einer emulsionspolymerisierbaren Monomermischung, welche ethylenisch ungesättigte Monomere enthält, die ausgewählt sind aus der Gruppe umfassend Olefine, Monovinylidenaromaten, $\alpha,\beta$-ethylenisch ungesättigte Carbonsäuren und Ester derselben, ethylenisch ungesättigte Dicarbonsäureanhydride, und halogensubstituierte Olefine; anschließend Versetzen des monomerhaltigen gerührten Reaktorinhalts mit einer wirksamen Menge eines Initiators, um die Emulsionspolymerisationsreaktion zu starten; Halten des initiatorhaltigen gerührten Reaktorinhalts über einen Zeitraum von etwa 5 Minuten auf der Reaktionstemperatur; Versetzen des initiatorhaltigen gerührten Reaktorinhalts über einen Zeitraum von 1 bis 2 Stunden mit dem Rest der Monomermischung; Versetzen des Reaktorinhalts bis zu einer Stunde nach dem Versetzen der Reaktionsmischung mit dem Rest der Monomermischung mit einer wirksamen Menge eines Harzes von niedrigem Molekulargewicht, welches in Wasser oder Alkali löslich oder dispergierbar ist, um vorgewählte Fließeigenschaften der Emulsionspolymerzusammensetzung zu erreichen, wobei das durchschnittliche Molekulargewicht des Harzes von niedrigem Molekulargewicht 500 bis 20.000 beträgt; wobei das Harz von niedrigem Molekulargewicht hergestellt wird aus ethylenisch ungesättigten Monomeren, die ausgewählt sind aus mindestens einem von Olefinen, Monovinylidenaromaten, $\alpha,\beta$-ethylenisch ungesättigten Carbonsäuren und Estern derselben, ethylenisch ungesättigten Dicarbonsäureanhydriden, und Mischungen derselben; und anschließend Halten des Reaktorinhalts über einen weiteren Zeitraum von 1 bis 2 Stunden auf der Reaktionstemperatur unter Rühren, wobei das Harz von niedrigem Molekulargewicht in einer Menge von mindestens 2 Gew.-% vorhanden ist, bezogen auf das Gesamtgewicht der in dem gerührten Reaktorinhalt enthaltenen Feststoffe.

**14.** Mit Harz versetzte Emulsionspolymerzusammensetzung, gekennzeichnet durch die Herstellung nach Anspruch 13.

**Revendications**

**1.** Procédé de production d'une composition de polymères en émulsion renforcée par une résine, à l'aide d'une réaction de polymérisation en émulsion, dans lequel des particules en émulsion se forment par suite de l'utilisation de la réaction de polymérisation en émulsion, le procédé étant caractérisé par les étapes suivantes : introduction dans un réacteur d'eau et d'une partie d'une quantité efficace d'un stabilisant tensioactif pour empêcher la coagulation des particules en émulsion, agitation du contenu du réacteur et exposition du contenu du réacteur à une atmosphère inerte, chauffage du contenu du réacteur agité à une température de réaction prédéterminée, introduction dans le réacteur agité d'une première partie d'un mélange de monomères polymérisables en émulsion comprenant des monomères éthyléniquement insaturés choisis dans le groupe formé par les oléfines, les aromatiques monovinylidéniques, les acides carboxyliques $\alpha,\beta$-éthyléniquement insaturés et leurs esters, les anhydrides dicarboxyliques éthyléniquement insaturés et les oléfines halogénosubstituées, introduction dans le réacteur agité contenant les monomères d'une quantité efficace d'un amorceur pour amorcer la réaction de polymérisation en émulsion, introduction dans le réacteur agité contenant l'amorceur d'une seconde partie du mélange de monomères en même temps que le reste de stabilisant tensioactif, puis introduction dans le réacteur agité d'une quantité efficace d'une résine de faible poids moléculaire, soluble ou dispersible dans l'eau ou dans les alcalis, pour obtenir des caractéristiques d'écoulement présélectionnées pour la composition de polymères en émulsion, dans lequel le poids moléculaire moyen en nombre de la résine de faible poids moléculaire est de 500 à 20 000, ladite résine de faible poids moléculaire étant préparée à partir de monomères éthyléniquement insaturés choisis parmi au moins un monomère tel que des oléfines, des aromatiques monovinylidéniques, des acides carboxyliques $\alpha,\beta$-éthyléniquement insaturés et leurs esters, des anhydrides dicarboxyliques éthyléniquement insaturés et leurs mélanges, et addition au contenu du réacteur agité contenant la résine du reste du mélange de monomères, ladite résine de faible poids moléculaire étant présente en une quantité d'au moins 2% en poids par rapport au poids total des solides contenus dans le réacteur agité.

2. Procédé selon la revendication 1, caractérisé en ce que le stabilisant tensioactif est un tensioactif non ionique, de préférence un alkylphénol éthoxylé choisi dans le groupe formé par le nonylphénol éthoxylé et l'octylphénol éthoxylé, chacun de ces alkylphénols éthoxylés comportant au moins 20 unités d'oxyde d'éthylène ; ou un monomère fonctionnel à base acrylique, de préférence choisi dans le groupe formé par l'acide acrylique, l'acide méthacrylique et le monométhacrylate de polyéthylèneglycol.

3. Procédé selon les revendications 1 ou 2, caractérisé en ce que le stabilisant tensioactif est présent dans le mélange réactionnel en une quantité de 1 à 8% en poids, de préférence de 2 à 4% en poids, par rapport au poids du mélange réactionnel.

4. Procédé selon les revendications 1, 2 ou 3, caractérisé en ce que la température de réaction prédéterminée est de 60 à 100°C et l'atmosphère inerte est de l'azote.

5. Procédé selon l'une quelconque des revendications 1 à 4, caractérisé en ce que les monomères éthyléniquement insaturés du mélange de monomères sont choisis dans le groupe formé par le styrène, l'$\alpha,\beta$-méthylstyrène, l'acide acrylique, l'acide méthacrylique, le méthacrylate de méthyle, le méthacrylate de butyle, l'acrylate de butyle, l'acrylate de 2-éthylhexyle, l'acrylate d'éthyle, l'acrylate d'hydroxyéthyle et le méthacrylate d'hydroxyéthyle.

6. Procédé selon l'une quelconque des revendications précédentes, caractérisé en ce que les monomères éthyléniquement insaturés qui sont utilisés pour préparer la résine de faible poids moléculaire sont choisis dans le groupe formé par l'acide acrylique, l'acide méthacrylique, le styrène, l'$\alpha$-méthylstyrène, le méthacrylaye d'hydroxyéthyle et les esters d'acide acrylique et d'acide méthacrylique, et de préférence le styrène, l'$\alpha$-méthylstyréne, l'acide acrylique et leurs mélanges.

7. Procédé selon l'une quelconque des revendications 1 à 6, caractérisé en ce que la résine de faible poids moléculaire est un copolymère de styrène et d'acide acrylique, de préférence dans un rapport de trois parties de styrène pour une partie d'acide acrylique, et a un poids moléculaire moyen en nombre de 1 000 à 6 000, de préférence de 2 000 à 4 000.

8. Composition de polymères en émulsion renforcée par une résine, caractérisée en ce qu'elle est préparée selon l'une quelconque des revendications 1 à 7.

9. Procédé de production d'une composition de polymères en émulsion renforcée par une résine à l'aide d'une réaction de polymérisation en émulsion, dans lequel des particules en émulsion se forment par suite de l'utilisation de la réaction de polymérisation en émulsion, le procédé étant caractérisé par les étapes suivantes : introduction dans un réacteur d'eau et d'une quantité efficace d'un stabilisant tensioactif pour empêcher la coagulation des particules en émulsion ; agitation du contenu du réacteur et exposition du contenu du réacteur à une atmosphère inerte; chauffage du contenu du réacteur agité à une température de réaction prédéterminée ; introduction simultanée dans le réacteur agité (1) d'un mélange de monomères polymérisables en émulsion comprenant des monomères éthyléniquement insaturés choisis dans le groupe formé par les oléfines, les aromatiques monovinylidéniques, les acides carboxyliques $\alpha,\beta$-éthyléniquement insaturés et leurs esters, les anhydrides dicarboxyliques éthyléniquement insaturés et les oléfines halogénosubstituées, et (2) d'une quantité efficace d'un amorceur pour amorcer la réaction de polymérisation en émulsion ; et introduction dans le réacteur agité, après l'amorçage de la réaction de polymérisation en émulsion, d'une quantité efficace d'une résine de faible poids moléculaire, soluble ou dispersible dans l'eau ou dans les alcalis, pour obtenir des caractéristiques d'écoulement présélectionnées pour la composition de polymères en émulsion, dans lequel le poids moléculaire moyen en nombre de la résine de faible poids moléculaire est de 500 à 20 000, dans lequel ladite résine de faible poids moléculaire est préparée à partir de monomères éthyléniquement insaturés choisis parmi au moins un monomère tel que des oléfines, des aromatiques monovinylidéniques, des acides carboxyliques $\alpha,\beta$-étyléniquement insaturés et leurs esters, des anhydrides dicarboxyliques éthyléniquement insaturés et leurs mélanges, ladite résine de faible poids moléculaire étant présente en une quantité d'au moins 2% en poids par rapport au poids total des solides contenus dans le réacteur agité, et dans lequel ladite résine de faible poids moléculaire est ajoutée à un instant quelconque jusqu'à une 1 h après que le mélange de monomères et l'amorceur ont été ajoutés au mélange réactionnel.

10. Composition de polymères en émulsion renforcée par une résine, caractérisée en ce qu'elle est préparée selon la revendication 9.

11. Procédé de production d'une composition de polymères en émulsion renforcée par une résine, à l'aide d'une réaction de polymérisation en émulsion, dans lequel des particules en émulsion se forment par suite de l'utilisation de la réaction de polymérisation en émulsion, le procédé étant caractérisé par les étapes suivantes : introduction dans un réacteur d'eau et d'une quantité efficace d'un stabilisant tensioactif pour empêcher la coagulation des particules en émulsion ; agitation du contenu du réacteur et exposition du contenu du réacteur agité à une atmosphère inerte ; chauffage du contenu du réacteur agité à une température de réaction prédéterminée ; introduction dans le réacteur agité de 0,1 à 15% en poids d'un mélange de monomères polymérisables en émulsion comprenant des monomères éthyléniquement insaturés choisis dans le groupe formé par les oléfines, les aromatiques mono-vinylidéniques, les acides carboxyliques $\alpha,\beta$-éthyléniquement insaturés et leurs esters, les anhydrides dicarboxyliques éthyléniquement insaturés et les oléfines halogénosubstituées ; introduction dans le réacteur agité contenant les monomères d'une quantité efficace d'un amorceur pour amorcer la réaction de polymérisation en émulsion ; introduction dans le réacteur agité contenant l'amorceur, sur une durée d'environ 1 h à environ 2 h, de 25 à 90% en poids de mélange de monomères; puis introduction dans le réacteur agité d'une quantité efficace d'une résine de faible poids moléculaire, soluble ou dispersible dans l'eau ou dans les alcalis, pour obtenir des caractéristiques d'écoulement présélectionnées pour la composition de polymères en émulsion, dans lequel le poids moléculaire moyen en nombre de la résine de faible poids moléculaire est de 500 à 20 000, dans lequel ladite résine de faible poids moléculaire est préparée à partir de monomères éthyléniquement insaturés choisis parmi au moins un monomère tel que des oléfines, des aromatiques monovinylidéniques, des acides carboxyliques $\alpha,\beta$-éthyléniquement insaturés et leurs esters, des anhydrides dicarboxyliques éthyléniquement insaturés et leurs mélanges ; addition, après achèvement de l'étape d'introduction de la résine, de 5 à 75% en poids du mélange de monomères au contenu du réacteur agité, sur une durée de ¼ h à 1 h, puis maintien du contenu du réacteur à la température de réaction, sous agitation, pendant 1 h à 2h supplémentaires, ladite résine de faible poids moléculaire étant présente en une quantité d'au moins 2% en poids par rapport au poids total des solides contenus dans le réacteur agité.

12. Composition de polymères en émulsion renforcée par une résine, caractérisée en ce qu'elle est préparée selon la revendication 11.

13. Procédé de production d'une composition de polymères en émulsion renforcée par une résine, à l'aide d'une réaction de polymérisation en émulsion, dans lequel des particules en émulsion se forment par suite de l'utilisation de la réaction de polymérisation en émulsion, le procédé étant caractérisé par les étapes suivantes : introduction dans un réacteur d'eau et d'une quantité efficace d'un stabilisant tensioactif pour empêcher la coagulation des particules en émulsion ; agitation du contenu du réacteur et exposition du contenu du réacteur à une atmosphère inerte; chauffage du contenu du réacteur agité à une température de réaction prédéterminée ; introduction dans le réacteur agité de 1/50 à 1/10 d'un mélange de monomères polymérisables en émulsion comprenant des monomères éthyléniquement insaturés choisis dans le groupe formé par les oléfines, les aromatiques monovinylidéniques, les acides carboxyliques $\alpha,\beta$-éthyléniquement insaturés et leurs esters, les anhydrides dicarboxyliques éthyléniquement insaturés et les oléfines halogénosubstituées ; puis introduction dans le réacteur agité contenant les monomères d'une quantité efficace d'un amorceur pour amorcer la réaction de polymérisation en émulsion ; maintien du contenu agité du réacteur contenant l'amorceur à la température de réaction pendant une durée d'environ 5 min ; introduction dans le réacteur agité contenant l'amorceur, sur une durée de 1 à 2 h, du reste du mélange de monomères ; introduction dans le réacteur, jusqu'à 1 h après l'introduction dans le réacteur du reste du mélange de monomères, d'une quantité efficace d'une résine de faible poids moléculaire, soluble ou dispersible dans l'eau ou dans les alcalis, pour obtenir des caractéristiques d'écoulement présélectionnées pour la composition de polymères en émulsion, dans lequel le poids moléculaire moyen en nombre de la résine de faible poids moléculaire est de 500 à 20 000, dans lequel ladite résine de faible poids moléculaire est préparée à partir de monomères éthyléniquement insaturés choisis parmi au moins un monomère tel que des oléfines, des aromatiques monovinylidéniques, des acides carboxyliques $\alpha,\beta$-éthyléniquement insaturés et leurs esters, des anhydrides dicarboxyliques éthyléniquement insaturés, et leurs mélanges ; puis maintien du contenu du réacteur à la température de réaction, sous agitation, pendant 1 à 2h supplémentaires, ladite résine de faible poids moléculaire étant présente en une quantité d'au moins 2% en poids par rapport au poids total des solides contenus dans le réacteur agité.

14. Composition de polymères en émulsion renforcée par une résine, caractérisée en ce qu'elle est préparée selon

la revendication 13.